# EUROPEAN PATENT APPLICATION

(11) **EP 4 663 712 A1**
(43) Date of publication of application: **17.12.2025**
(21) Application number: 24753168.4
(22) Date of filing: 29.01.2024
(51) Int. Cl.: C09D 171/00, B05D 7/24, C09D 183/04

(54) **FLUORINE-CONTAINING COATING AGENT, ARTICLE, AND METHOD FOR MODIFYING SURFACE OF ARTICLE**

(30) Priority: 07.02.2023 JP 2023016782
(71) Applicant: SHIN-ETSU CHEMICAL CO., LTD., Tokyo 1000005 (JP)
(72) Inventor: UCHIDA Takashi, Annaka-shi, Gunma 379-0224 (JP)
(74) Representative: Ter Meer Steinmeister & Partner
(86) International application number: PCT/JP2024/002603
(87) International publication number: WO 2024/166724

(57) **Abstract**

This fluorine-containing coating agent, which is used on an article for plumbing applications, is capable of forming a hardened film having excellent antifouling properties and wear durability, and includes a composition in which a fluoropolyether group-containing polymer having a hydrolyzable silyl group or hydroxysilyl group, and/or a partial (hydrolyzed) condensate thereof, is uniformly dissolved in an organic solvent having no fluorine atom in a molecule. The molar mass of the fluoropolyether group in the polymer is 2,500 Da or more, and the fluorine content of the polymer (excluding a trifluoromethyl group present in a branched chain of a fluoropolyether group) is 50 mass% or less.

## Description

### TECHNICAL FIELD

The present invention relates to a fluorine-containing coating agent comprising a composition of a fluoropolyether group-containing polymer as a uniform solution (dilution) in an organic solvent having no fluorine atoms in the molecule, particularly to a fluorine-containing coating agent for use on articles for water-exposed applications (specifically, articles that are intermittently brought into contact with tap water or rainwater) that comprises a composition in which a polymer containing a hydrolyzable silyl group or a hydroxysilyl group in the molecule and a fluoropolyether group (a structure including fluorooxyalkylene repeating units) with a specific molar weight (number average molecular weight) and having a specific fluorine content and/or a partial (hydrolyzed) condensate thereof is uniformly dissolved in an organic solvent having no fluorine atoms in the molecule, preferably to a fluorine-containing coating agent for use on articles for water-exposed applications that can form a cured film with excellent water/oil repellency and abrasion durability on the surface of an article by a wet coating process, such as dip coating or brush coating. The present invention also relates to an article for water-exposed application that has a layer comprising a cured product of the coating agent, and to a method for modifying the surface of an article for water-exposed application that comprises a step of applying the coating agent and curing the coating agent to form a layer.

### BACKGROUND ART

Water/oil-repellent treatment is generally applied to the surface of semiconductor manufacturing process members, mold members, precision instrument members, medical equipment parts, automobile parts, building materials, home appliances, office equipment, and household goods. The treatment adds a desired antifouling function that prevents fouling with water droplets, oil droplets, dust, water stains, fingerprints, sebum, processing residues, and other contaminants or makes it easier to remove adhering contaminants.

Fluoropolyether group-containing compounds have a very low surface free energy and thus generally exhibit such properties as water/oil repellency, chemical resistance, lubricating properties, release properties, and antifouling properties. By taking advantage of these properties, they have found wide use in industry, including water/oil-repellent antifouling agents for paper, textiles, and the like, lubricants for magnetic recording media, oil-repellent agents for precision instruments, releasing agents, cosmetic ingredients, and protective films. However, their properties mean at the same time that the compounds do not stick or adhere to other substrates; the compounds can be applied to the substrate surface but the resultant film will not adhere tightly.

Meanwhile, silane coupling agents are well known as materials that bond organic compounds to the surfaces of substrates, such as glass or fabrics, and are widely used as coating agents on the surfaces of various substrates. A silane coupling agent has an organic functional group and a reactive silyl group (typically a hydrolyzable silyl group, such as an alkoxysilyl group) in the molecule. In the presence of water, such as airborne moisture, the hydrolyzable silyl groups undergo self-condensation reaction to form a film. The film is durable and tough as a result of chemical and physical bonds of the hydrolyzable silyl groups with the surface of glass, a metal, or the like.

Based on the above fact, compositions are disclosed that include a fluoropolyether group-containing polymer obtained by introducing a hydrolyzable silyl group into a fluoropolyether group-containing compound and that can easily adhere tightly to the substrate surface and can form on the substrate surface a film with such properties as water/oil repellency, chemical resistance, lubricating properties, release properties, and antifouling properties (Patent Documents 1 to 6: JP-A 2008-534696, JP-A 2008-537557, JP-A 2012-072272, JP-A 2012-157856, JP-A 2013-136833, and JP-A 2015-199906).

Regarding these related techniques, the fluoropolyether group-containing polymers are applied to substrates (form a film on substrates) by a dry coating process or a wet coating process. In the case of wet coating, the coating agent that is used is a solution (dilution) of the fluoropolyether group-containing polymer in an organic solvent containing a fluorine atom in the molecule (a fluorine-containing organic solvent). The fluoropolyether group-containing polymer, after being applied, exhibits a higher water/oil repellent performance on the surface with increasing length of the fluoropolyether structure. However, the extension in length increases the fluorine content in the polymer and thus results in very poor solubility in organic solvents that do not contain fluorine atoms in the molecule (fluorine-free organic solvents). In order to ensure uniform application to the surface of a material, such polymers need to be dissolved (diluted) into a low-molecular volatile organic solvent containing a fluorine atom in the molecule.

Low-molecular fluorine compounds, such as PFOS (perfluorooctanesulfonic acid) and PFOA (perfluorooctanoic acid), are recently restricted more strongly due to concerns, such as their environmental impacts, bioaccumulation, and toxicity. Thus, fluorine-containing solvents are more often required to be used with, for example, a special removal system different from those for general fluorine-free organic solvents, and stronger safety measures for workers. Furthermore, fluorine-containing organic solvents are expensive compared to general fluorine-free organic solvents. Thus, reducing the amounts of fluorine-containing solvents that are used is also required from the perspective of cost.

Due to the social background described above, the amounts and the working environments in which fluorine-containing solvents are allowed to be used tend to be significantly restricted in recent years. Thus, there has been a demand for compounds that can impart excellent properties (such as antifouling properties and abrasion resistance) originating from fluorine-containing polymers (fluoropolyether group-containing compounds) to the surface of cured products without involving the use of fluorine-containing solvents.

Incidentally, techniques are known that prevent articles for water-exposed applications from metal salt fouling (scales) caused by the precipitation of metals contained in water (specifically, alkaline earth metals, such as calcium and magnesium). For example, in Patent Document 7 (JP-A H09-326240), a cured film is formed from a coating liquid in which a perfluoropolyether group-containing silane compound with a number average molecular weight of about 2,000 (namely, approximately 2,000 Da molar weight) is dissolved in an organic solvent having no fluorine atoms in the molecule. Unfortunately, the cured film is insufficient in scale removability and abrasion resistance. In each of Patent Document 8 (JP 4363388) and Patent Document 9 (JP-A 2022-118099), a cured film is formed on an embossed stainless steel substrate or a chrome-plated metal substrate, from a coating liquid that includes a perfluoropolyether group-containing silane compound. These coating liquids use an organic solvent containing a fluorine atom in the molecule.

### PRIOR ART DOCUMENTS

### PATENT DOCUMENTS

Patent Document 1: JP-A 2008-534696
Patent Document 2: JP-A 2008-537557
Patent Document 3: JP-A 2012-072272
Patent Document 4: JP-A 2012-157856
Patent Document 5: JP-A 2013-136833
Patent Document 6: JP-A 2015-199906
Patent Document 7: JP-A H09-326240
Patent Document 8: JP 4363388
Patent Document 9: JP-A 2022-118099
Patent Document 10: JP-A 2022-019577
Patent Document 11: JP-A 2014-214194
Patent Document 12: WO 2021/065537

### SUMMARY OF INVENTION

### TECHNICAL PROBLEM

The present invention has been made in view of the circumstances discussed above and therefore aims to provide a fluorine-containing coating agent for use on articles for water-exposed applications that comprises a fluoropolyether group-containing polymer composition as a uniform solution (dilution) in a fluorine-free organic solvent and is capable of forming a cured film with excellent antifouling properties and abrasion resistance, as well as to provide an article for water-exposed application that has a layer comprising a cured product of a specific fluoropolyether group-containing polymer contained in the fluorine-containing coating agent, and a method for modifying the surface of an article for water-exposed application that comprises a step of applying the coating agent and curing the coating agent to form a layer.

### SOLUTION TO PROBLEM

The present inventor carried out extensive studies directed to achieving the above object. As a result, the present inventor has found that a specific fluoropolyether group-containing, and hydrolyzable silyl group- or hydroxysilyl group-containing polymer described later in which the molar weight of the fluoropolyether group in the polymer is 2,500 Da or more and the fluorine content in the polymer (excluding trifluoromethyl groups present in branched chains of the fluoropolyether group) is 50 wt% or less, and/or a partial (hydrolyzed) condensate thereof can be uniformly dissolved into a fluorine-free organic solvent, and the resultant fluorine-containing coating agent can form a cured film that is excellent in antifouling properties and abrasion resistance. Based on the finding, the present inventor has completed the present invention.

Thus, the present invention provides the following fluorine-containing coating agent, article, and method for modifying the surface of an article.
[1] A fluorine-containing coating agent for use on article for water-exposed application, comprising a composition in which a fluoropolyether group-containing polymer having a hydrolyzable silyl group or a hydroxysilyl group and/or a partial (hydrolyzed) condensate thereof is uniformly dissolved in an organic solvent having no fluorine atoms in the molecule, the molar weight of the fluoropolyether group in the polymer being 2,500 Da or more, and the fluorine content in the polymer (excluding a trifluoromethyl group present in a branched chain of the fluoropolyether group) being 50 wt% or less.
[2] The fluorine-containing coating agent according to [1], wherein the fluoropolyether group-containing polymer having a hydrolyzable silyl group or a hydroxysilyl group is represented by formula (1) below:
[Chem. 1]

A¹-Rf-D (1)

[wherein Rf is a divalent fluoropolyether group having a molar weight of 2,500 Da or more; A¹ is a fluorine atom, a monovalent fluorine-containing hydrocarbon group terminated with CF₃- or CF₂H- and optionally containing an oxygen atom, or D; and D independently at each occurrence is a monovalent group represented by formula (2) below: 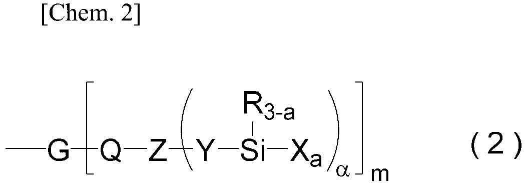
(wherein m is 1 or 2; G is a single bond or a trivalent organic group; Q independently at each occurrence is a single bond, an oxygen atom, or a divalent organic group; Z independently at each occurrence is a single bond or a trivalent to octavalent group; α independently at each occurrence is an integer of 1 to 7; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; and a is 2 or 3 independently with respect to each silicon atom to which X is bonded, with a proviso that at least one of G, Q, Z, and Y is not a single bond)].

[3] The fluorine-containing coating agent according to [2], wherein Rf in formula (1) is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ(WO)ᵥ-C_{d}F_{2d}-(wherein W is a C1-C6 fluoroalkylene group containing one or more hydrogen atoms; d independently with respect to each unit is an integer of 0 to 5; p, q, r, s, t, u, and v are each independently an integer of 0 to 150; the sum of p, q, r, s, t, u, and v is an integer of 8 to 250 and is such an integer that the molar weight of Rf is 2,500 Da or more; the units indicated with these subscripts are each linear or branched; and the repeating units in the parentheses followed by p, q, r, s, t, u, and v are each optionally bonded randomly).
[4] The fluorine-containing coating agent according to [2] or [3], wherein in formula (2), G is a single bond or a trivalent group represented by any of the following formulas: 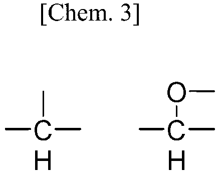
(wherein the left valence bond is bonded to Rf, and the other valence bonds are bonded to Q); Q is a single bond, an oxygen atom, an amide bond, an ether bond, a carbonyl bond, an ester bond, or a divalent group comprising a C1-C15 unsubstituted or substituted, divalent hydrocarbon group optionally containing one or more bonds selected from the group consisting of amide bonds, ether bonds, carbonyl bonds, ester bonds, sulfide bonds, urethane bonds, siloxane bonds, triazine bonds, diorganosilylene bonds, silphenylene bonds, and silalkylene bonds; and
Z is a single bond or a trivalent to octavalent group selected from a silicon atom, a nitrogen atom, and a trivalent to octavalent organopolysiloxane residue having a siloxane bond.

[5] The fluorine-containing coating agent according to any one of [2] to [4], wherein X in formula (2) independently at each occurrence is a group selected from the groups consisting of hydroxyl groups, C1-C10 alkoxy groups, C2-C10 alkoxy-substituted alkoxy groups, C2-C10 acyloxy groups, C2-C10 alkenyloxy groups, and halogen groups.
[6] The fluorine-containing coating agent according to any one of [1] to [5], wherein the organic solvent having no fluorine atoms in the molecule is one, or two or more organic solvents selected from isopropyl alcohol, methyl isobutyl ketone, methyl ethyl ketone, hexane, n-heptane, ethyl acetate, isopropyl acetate, butyl acetate, tetrahydrofuran, isononane, isooctane, cyclopentanone, propylene glycol monomethyl ether, and propylene glycol monomethyl ether acetate.
[7] An article for water-exposed application having a layer comprising a cured product of the fluoropolyether group-containing polymer having a hydrolyzable silyl group or a hydroxysilyl group and/or the partial (hydrolyzed) condensate thereof that is contained in the fluorine-containing coating agent according to any one of [1] to [6].
[8] The article for water-exposed application according to [7], wherein the surface of the cured layer has a Good or higher antifouling rating when tested under conditions described below:
[Antifouling test conditions]
- Removability of tap water scale from the surface of the cured layer disposed on a SUS304 substrate
0.2 mL of tap water is dropped onto the surface of the cured layer and is dried for 24 hours under an environment at 25°C and 50% RH to form a tap water scale on the surface of the cured layer; the scale is removed by rubbing with pure water-moistened BEMCOT (M-3II, manufactured by OZU CORPORATION) at a pressure of 200 g/cm²; the surface is visually inspected to determine the number of rubbing applications required for descaling; the rating is "Superior" when the number of rubbing applications is 3 or less, "Good" when the number of rubbing applications is 5 or less, "Acceptable" when the number of rubbing applications is 20 or less, and "Fail" when the number of rubbing applications is more than 20.
[9] The article for water-exposed application according to [7] or [8], wherein the surface of the cured layer resists 10,000 or more abrasion resistance cycles under test conditions described below:
[Abrasion resistance test conditions]
- Evaluation of the resistance of the surface of the cured layer disposed on a SUS304 substrate to wet fabric abrasion using a reciprocating abrasion tester

| | |
|---|---|
| Material of substrate of article: | SUS304 |
| Abrasive material: | pure water-moistened BEMCOT (M-3II, manufactured by OZU CORPORATION) |
| Load: | 1 kgf |
| Reciprocating distance: | 40 mm |
| Reciprocating speed: | 60 reciprocations per minute |
| Test environment conditions: | 25°C, 50% RH |

The contact angle with water of a friction-abraded portion is measured every 2,500 reciprocating friction cycles, and the number of reciprocating abrasion cycles up to which the contact angle with water is 100° or more is taken as the number of abrasion resistance cycles.
[10] A method for modifying a surface of an article for water-exposed application, comprising a step of applying the fluorine-containing coating agent according to any one of [1] to [6] to the whole or part of the surface of the article by a dry or wet process, and curing the fluorine-containing coating agent to form a layer comprising a cured product of the fluoropolyether group-containing polymer having a hydrolyzable silyl group or a hydroxysilyl group and/or the partial (hydrolyzed) condensate thereof that is contained in the fluorine-containing coating agent.

### ADVANTAGEOUS EFFECTS OF INVENTION

The fluorine-containing coating agent of the present invention for use on articles for water-exposed applications contains a fluoropolyether group-containing polymer having a hydrolyzable silyl group or a hydroxysilyl group and/or a partial (hydrolyzed) condensate thereof. The molar weight of the fluoropolyether group in the polymer is 2,500 Da or more, and the fluorine content in the polymer (excluding trifluoromethyl groups present in branched chains of the fluoropolyether group) is 50 wt% or less. By virtue of these configurations, the polymer or the partial (hydrolyzed) condensate thereof can be applied (by a wet coating process) as a uniform solution (dilution) in an organic solvent having no fluorine atoms in the molecule (without using a fluorine-containing organic solvent) and can give a cured film that excels in antifouling properties and exhibits high abrasion resistance. Furthermore, articles for housing facilities, such as articles for water-exposed applications, exhibit excellent antifouling properties and high abrasion resistance by virtue of having a layer produced using the fluorine-containing coating agent of the present invention, specifically, a layer comprising a cured product of the fluoropolyether group-containing polymer or the like.

### DESCRIPTION OF EMBODIMENTS

### [Fluorine-containing coating agents]

A fluorine-containing coating agent of the present invention for use on articles for water-exposed applications comprises a composition in which a specific fluoropolyether group-containing polymer having a hydrolyzable silyl group or a hydroxysilyl group and/or a partial (hydrolyzed) condensate thereof is uniformly dissolved in an organic solvent having no fluorine atoms in the molecule (a fluorine-free organic solvent), the molar weight of the fluoropolyether group in the polymer being 2,500 Da or more, the fluorine content in the polymer (excluding trifluoromethyl groups present in branched chains of the fluoropolyether group) being 50 wt% or less.

In the present invention, the term "partial (hydrolyzed) condensate" indicates a partial condensate or a partial hydrolyzed condensate. In the present invention, the molar weight (unit: Da) of the fluoropolyether group is synonymous with the number average molecular weight of the fluoropolyether group. The molar weight (the number average molecular weight) of the fluoropolyether group may be determined as the number average molecular weight (or the number average degree of polymerization) relative to polymethyl methacrylate resins by gel permeation chromatography (GPC) analysis using a fluorine-containing solvent as a developing solvent, and is preferably calculated from the characteristic peak intensity ratio of the main chain structure to the terminal structures of the fluoropolyether group-containing polymer based on ¹H-NMR analysis and ¹⁹F-NMR analysis (the same applies hereinbelow).

The present invention will be described in detail below.

In the fluorine-containing coating agent of the present invention for use on articles for water-exposed applications, the fluoropolyether group-containing polymer having a hydrolyzable silyl group or a hydroxysilyl group preferably comprises a fluoropolyether group-containing polymer having a hydrolyzable silyl group or a hydroxysilyl group that is represented by formula (1) below and/or a partial (hydrolyzed) condensate thereof, and particularly preferably comprises a fluoropolyether group-containing polymer(s) having a hydrolyzable silyl group or a hydroxysilyl group that is (or that are all) represented by formula (1) below and/or comprises a partial (hydrolyzed) condensate(s) of such a polymer(s). That is, the fluorine-containing coating agent may include a partial condensate obtained by condensing part of the hydroxyl groups in the fluoropolyether group-containing polymer having a hydrolyzable silyl group or a hydroxysilyl group that is represented by formula (1), or a partial hydrolyzed condensate obtained by condensing the hydroxyl groups resulting from the pre-hydrolysis of part of the hydrolyzable groups in the terminal hydrolyzable silyl groups of the fluoropolyether group-containing polymer according to a known process.

[Chem. 4]

A¹-Rf-D (1)

[In the formula, Rf is a divalent fluoropolyether group having a molar weight of 2,500 Da or more; A¹ is a fluorine atom, a monovalent fluorine-containing hydrocarbon group terminated with CF₃- or CF₂H- and optionally containing an oxygen atom, or D; and D independently at each occurrence is a monovalent group represented by formula (2) below: 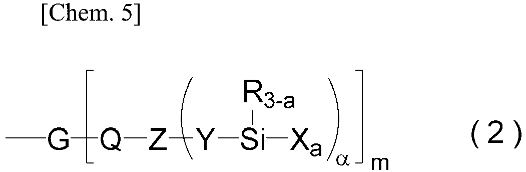 (wherein m is 1 or 2; G is a single bond or a trivalent organic group; Q independently at each occurrence is a single bond, an oxygen atom, or a divalent organic group; Z independently at each occurrence is a single bond or a trivalent to octavalent group; α independently at each occurrence is an integer of 1 to 7; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; and a is 2 or 3 independently with respect to each silicon atom to which X is bonded, with the proviso that at least one of G, Q, Z, or Y is not a single bond).]

The fluoropolyether group-containing polymer having a hydrolyzable silyl group or a hydroxysilyl group that is represented by the following formula (1) will be described.
[Chem. 6]

A¹-Rf-D (1)

In formula (1), Rf is a divalent fluoropolyether group having a molar weight of 2,500 Da or more, and is preferably a divalent polyfluorooxyalkylene structure (fluoropolyether structure including fluorooxyalkylene repeating units)-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ(WO)ᵥ-C_{d}F_{2d}-.

Here, d independently with respect to each unit is an integer of 0 to 5, preferably an integer of 0 to 2, and more preferably 0 or 1. The letters p, q, r, s, t, u, and v are each independently an integer of 0 to 150, preferably an integer of 0 to 100, and more preferably an integer of 0 to 60. The sum of p, q, r, s, t, u, and v is an integer of 8 to 250, preferably an integer of 8 to 140, and more preferably an integer of 8 to 70, and is such an integer that the molar weight of Rf is 2,500 Da or more. Good adhesion and curability are advantageously obtained when the sum of p, q, r, s, t, u, and v is smaller than the above upper limit. The characteristics of the fluoropolyether group can be fully exhibited when the sum is larger than the above lower limit. The units indicated with these subscripts are each linear or branched. The repeating units in the parentheses followed by p, q, r, s, t, u, and v are each optionally bonded randomly.

Furthermore, W is a C1-C6 fluoroalkylene group containing one or more hydrogen atoms. Examples thereof include perfluoroalkylene groups, such as CF₂ unit, C₂F₄ unit, C₃F₆ unit, C₄F₈ unit, C₅F₁₀ unit, and C₆F₁₂ unit, substituted with a hydrogen atom in place of one or two fluorine atoms.

Specific examples of the divalent fluoropolyether groups Rf include the following structures: 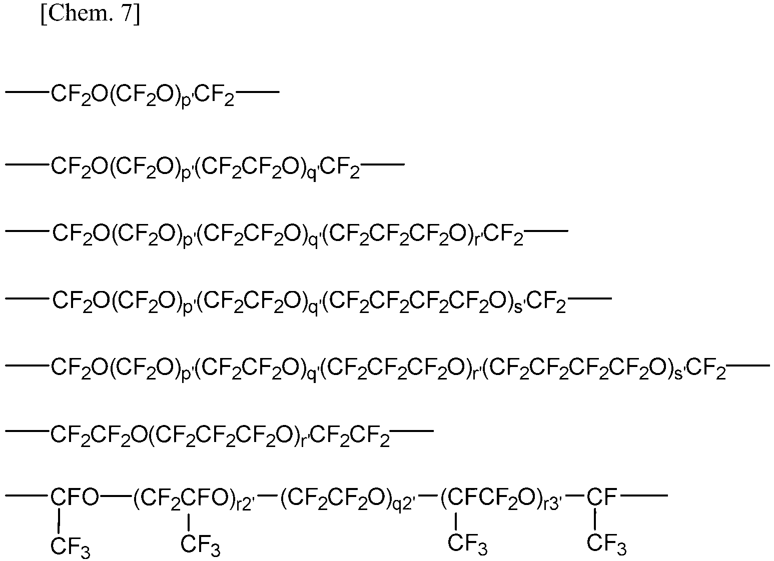 (wherein p', q', q2', r', and s' are each an integer of 1 to 150; r2' and r3' are each an integer of 1 or greater; the sum of r2' and r3' is an integer of 2 to 150; the sum of p', q', q2', r', r2', r3', and s' in each case is an integer of 8 to 250 and is such an integer that the molar weight of Rf is 2,500 Da or more; and the repeating units in the parentheses followed by p', q', r', and s' are each optionally bonded randomly).

In formula (1), A¹ is a fluorine atom, a monovalent fluorine-containing hydrocarbon group terminated with CF₃- or CF₂H- and optionally containing an oxygen atom, or D (namely, a monovalent group represented by formula (2) described later). The monovalent fluorine-containing hydrocarbon group terminated with CF₃- or CF₂Hand optionally containing an oxygen atom may be preferably a C1-C7 fluoroalkyl group or fluorooxyalkyl group, and may be particularly preferably a C1-C4 fluoroalkyl group or a C4-C7 fluorooxyalkyl group each terminated with CF₃- or CF₂H-.

Examples of the monovalent fluorine-containing hydrocarbon groups A¹ terminated with CF₃- or CF₂H- and optionally containing an oxygen atom include the following groups:

[Chem. 8] CF₂H- CF₃- C₂F₅- C₃F₇- C₄F₉- CF₂HCF₂- C₃F₇OCFHCF₂OCH₂- CF₃OCFHCF₂OCH₂- CF₃OC₃F₆OCFHCF₂OCH₂-

A¹ is preferably a fluorine atom or D.

In formula (1), D independently at each occurrence is a monovalent group represented by formula (2) below:

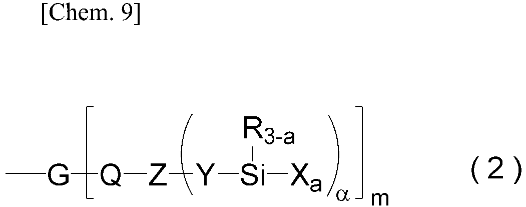

In formula (2), G is a single bond or a trivalent organic group. Examples of the trivalent organic groups include the following groups. In the following structures, it is preferable that the left valence bond be bonded to Rf and the other valence bonds be bonded to Q.

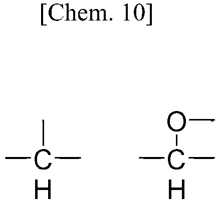

In formula (2), Q independently at each occurrence is a single bond, an oxygen atom, or a divalent organic group. When Q is not a single bond or an oxygen atom, Q is preferably an amide bond (for example, an unsubstituted amide bond, an N-methyl substituted amide bond, or an N-phenyl substituted amide bond), an ether bond, a carbonyl bond, an ester bond, or a C1-C15, preferably C2-C15, unsubstituted or substituted, divalent hydrocarbon group optionally containing one or more bonds selected from the group consisting of amide bonds (for example, unsubstituted amide bonds, N-methyl substituted amide bonds, and N-phenyl substituted amide bonds), ether bonds, carbonyl bonds, ester bonds, sulfide bonds, urethane bonds, siloxane bonds, triazine bonds, diorganosilylene bonds (for example, dialkylsilylene bonds, such as dimethylsilylene bond), silarylene bonds (for example, silphenylene bond), and silalkylene bonds (for example, silethylene bond), and is preferably a C1-C12, preferably C2-C12, unsubstituted or fluorine-substituted, divalent hydrocarbon group optionally containing the above bond(s).

Here, examples of the silalkylene bonds and the silarylene bonds include those illustrated below: 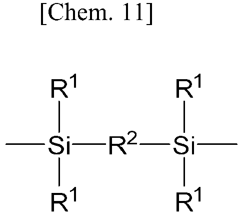 (wherein R¹ is a C1-C8, more preferably C1-C4, alkyl group, such as a methyl group, an ethyl group, a propyl group, or a butyl group, or a C6-C10 aryl group, such as a phenyl group, and the plurality of R¹ may be the same as or different from one another; and R² is a C1-C4 alkylene group, such as a methylene group, an ethylene group, or a propylene group (a trimethylene group or a methylethylene group), or a C6-C10 arylene group, such as a phenylene group).

Examples of Q other than a single bond and an oxygen atom include the following groups. In the structures below, it is preferable that the left valence bond be bonded to Rf and the right valence bond be bonded to Z. 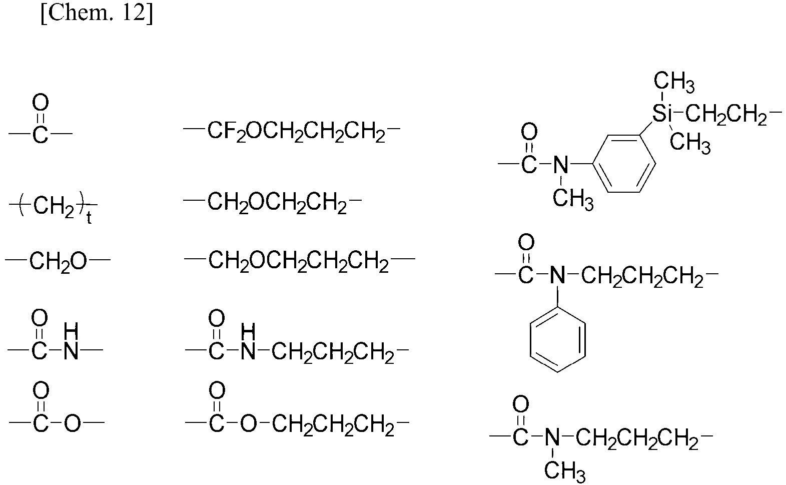 (In the formula, t is an integer of 2 to 4.)

In formula (2), Z independently at each occurrence is a single bond or a trivalent to octavalent group and is preferably a single bond or a trivalent to octavalent, preferably trivalent or tetravalent group selected from a silicon atom, a nitrogen atom, and a trivalent to octavalent organopolysiloxane residue having a siloxane bond, preferably a linear, branched, or cyclic organopolysiloxane residue having 3 to 13 silicon atoms, more preferably 3 to 5 silicon atoms. Z may also include a silalkylene structure, such as a silethylene structure, in which two silicon atoms are bonded via an alkylene group, such as an ethylene group (that is, the silalkylene bond described hereinabove with respect to Q).

Examples of the trivalent to octavalent organopolysiloxane residues having a siloxane bond include linear, cyclic, or branched organopolysiloxane residues illustrated below: 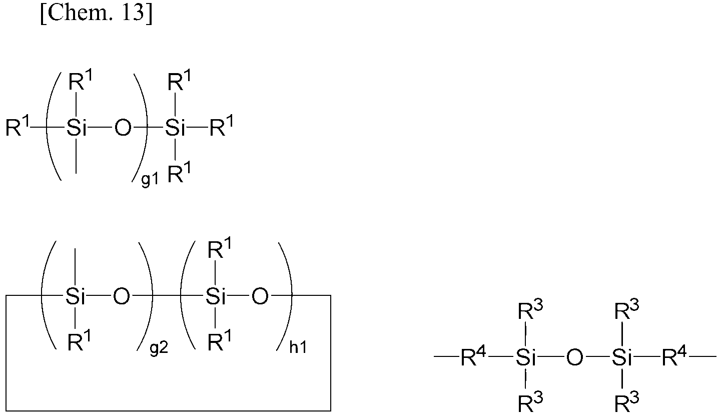
[wherein R¹ is the same as defined hereinabove; g1 is an integer of 3 to 8, preferably 3 or 4; g2 is an integer of 3 to 8, preferably 3 or 4; h1 is an integer of 0 to 8, preferably 0 or 1; g2 + h1 is an integer of 3 to 13, preferably an integer of 3 to 5; the repeating units in the parentheses followed by g2 and h1 are each optionally bonded randomly; R³ is R¹ or a group represented by formula (6) below: 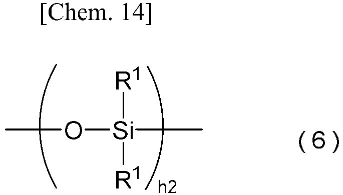
(wherein R¹ is the same as defined hereinabove; h2 is an integer of 1 to 6, preferably 1; and the left valence bond is bonded to Si); and R⁴ is a single bond or a group represented by formula (7) below: 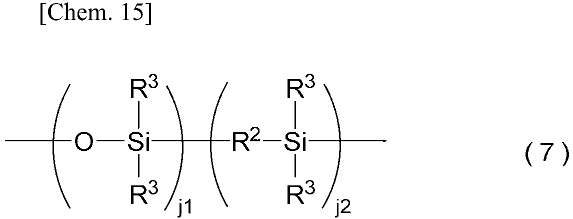
(wherein R² and R³ are the same as defined hereinabove; j1 is an integer of 0 to 6, preferably an integer of 0 to 3; j2 is an integer of 0 to 6, preferably an integer of 0 to 2; j1 + j2 is an integer of 1 to 10, preferably an integer of 1 to 3; the repeating units in the parentheses followed by j1 and j2 are each optionally bonded randomly; and the left valence bond is bonded to Si),
with the proviso that one to six of all the groups R³ in the organopolysiloxane residue are groups represented by formula (6) and the number of silicon atoms is 3 to 13].

Examples of Z other than a single bond include those illustrated below. In the structures below, it is preferable that the left valence bond be bonded to Q and the other valence bonds be bonded to Y.

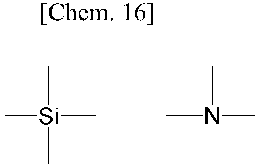

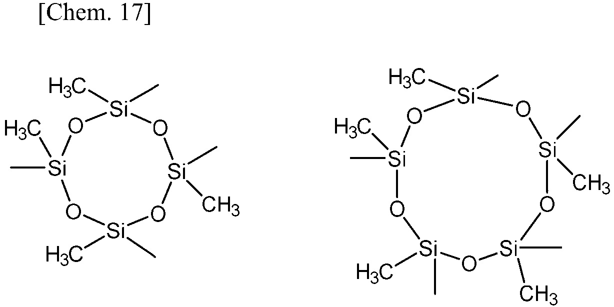

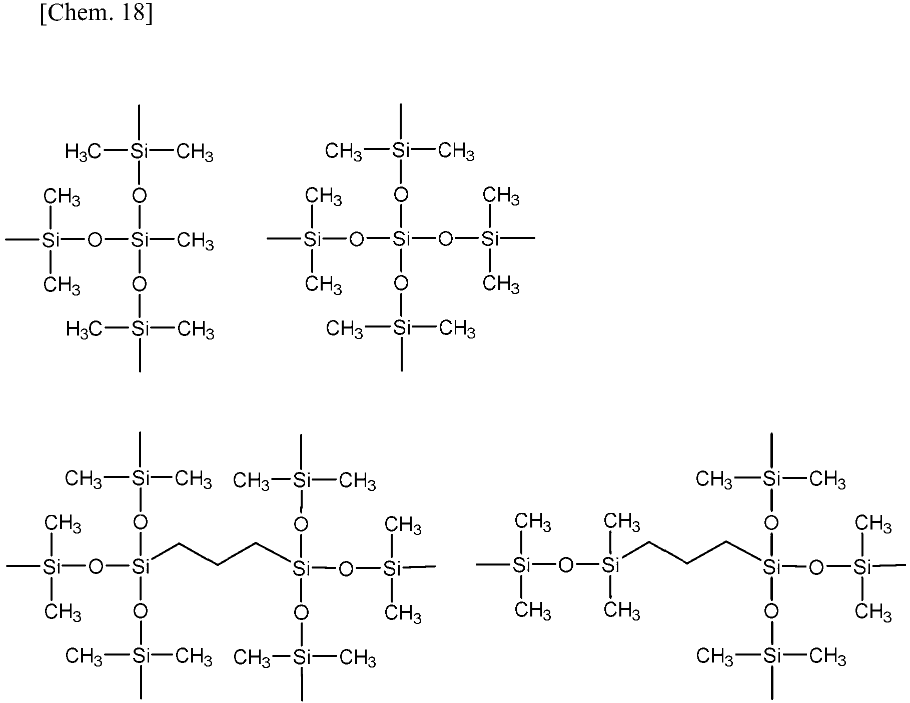

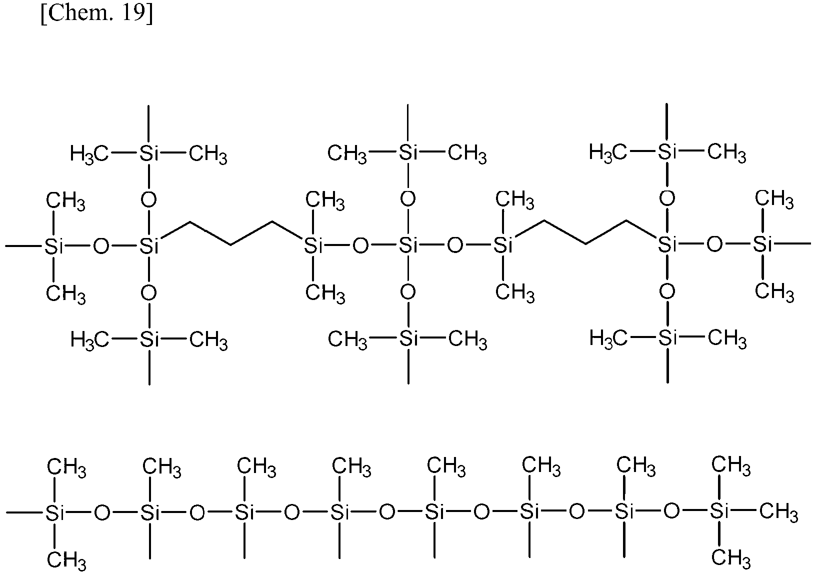

In formula (2), Y independently at each occurrence is a single bond or a divalent hydrocarbon group optionally having one, or two or more selected from fluorine atoms, silicon atoms, and siloxane bonds. The divalent hydrocarbon group optionally having one, or two or more selected from fluorine atoms, silicon atoms, and siloxane bonds is a group selected from the group consisting of C1-C10 alkylene groups, C1-C10 fluorine-containing alkylene groups, alkylene groups containing a C6-C8 arylene group (alkylene-arylene groups), divalent groups in which alkylene groups are bonded to one another via a silalkylene structure or a silarylene structure, and divalent groups in which a C2-C10 alkylene group is bonded to a valence bond of a linear divalent organopolysiloxane residue containing 2 to 10 silicon atoms or to a valence bond of a branched or cyclic divalent organopolysiloxane residue containing 3 to 10 silicon atoms.

Specific examples of Y other than a single bond include those illustrated below. In the following structures, it is preferable that the left valence bond be bonded to Z and the right valence bond be bonded to the silicon atom.

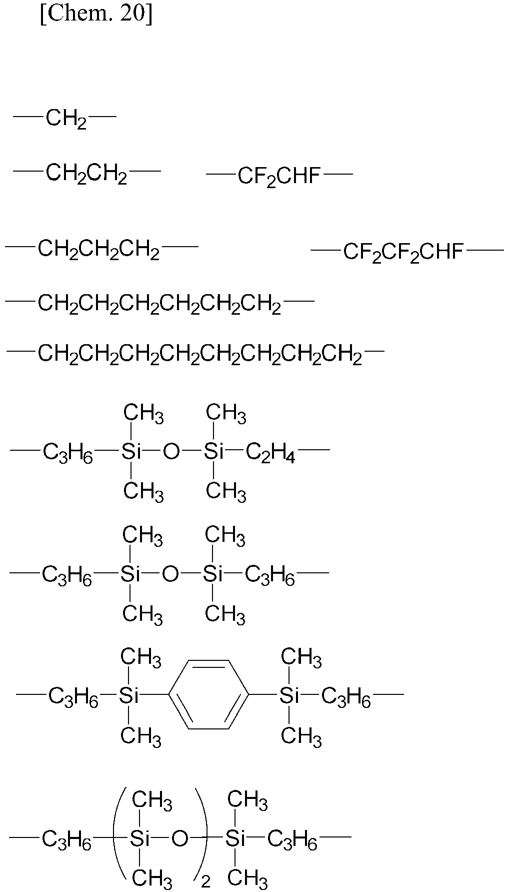

In formula (2), at least one of G, Q, Z, or Y is not a single bond.

In formula (2), R independently at each occurrence is a C1-C4 alkyl group, such as a methyl group, an ethyl group, a propyl group, or a butyl group, or a phenyl group, and is particularly preferably a methyl group or an ethyl group.

In formula (2), X independently at each occurrence is a hydroxyl group or a hydrolyzable group. Examples of the hydrolyzable groups X include C1-C10 alkoxy groups, such as methoxy group, ethoxy group, propoxy group, isopropoxy group, butoxy group, isobutoxy group, sec-butoxy group, and tert-butoxy group; C2-C10 alkoxy-substituted alkoxy groups, such as methoxymethoxy group, methoxyethoxy group, ethoxymethoxy group, and ethoxyethoxy group; C2-C10 acyloxy groups, such as acetoxy group and propionoxy group; C2-C10 alkenyloxy groups, such as vinyloxy group, allyloxy group, propenoxy group, and isopropenoxy group; and halogen groups, such as chloro group, bromo group, and iodo group. In particular, X is preferably a methoxy group, an ethoxy group, an isopropenoxy group, or a chloro group.

In formula (2), a is 2 or 3 independently with respect to each silicon atom to which X is bonded, and is preferably 3 from the points of view of reactivity and the adhesion to a substrate.

In formula (2), α, which indicates the number of hydrolyzable silyl groups or hydroxysilyl groups, independently at each occurrence is an integer of 1 to 7, and preferably an integer of 1 to 5.

In formula (2), m is 1 or 2.

Examples of the groups represented by formula (2) (that is, D in formula (1)) include those illustrated below:

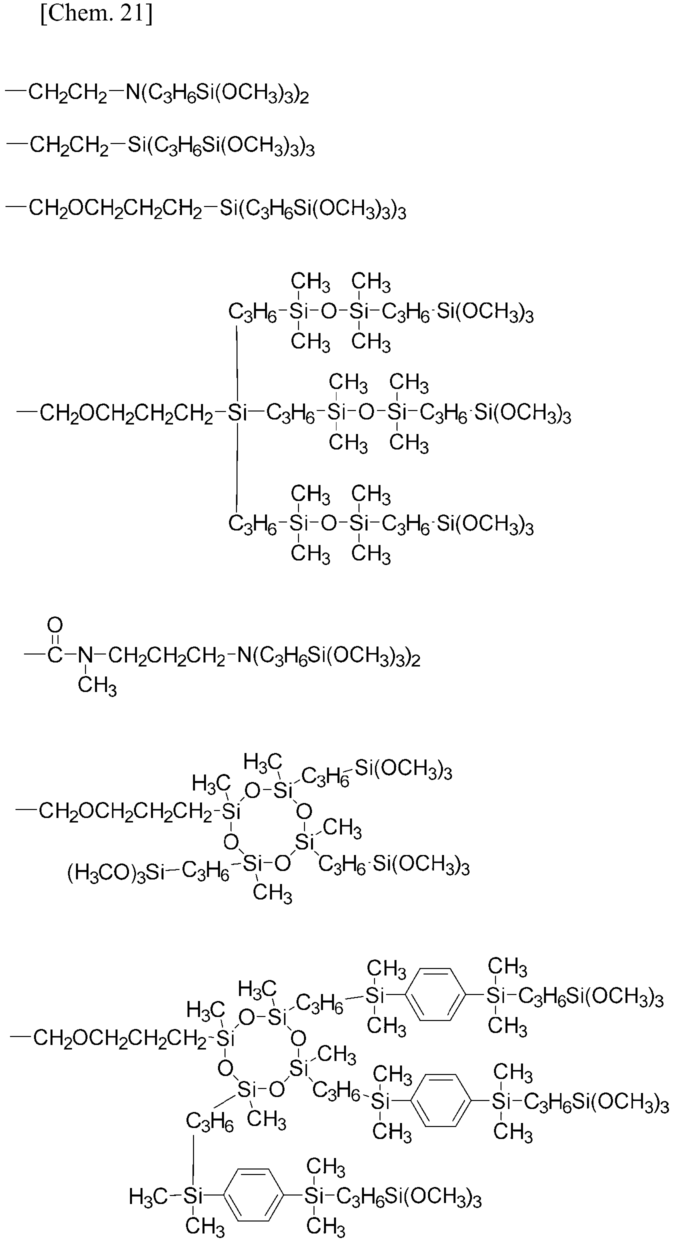

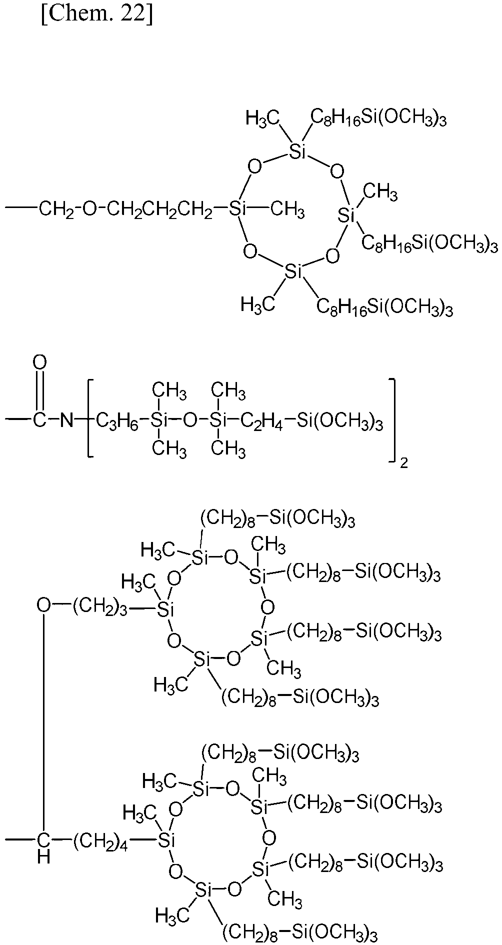

Examples of the fluoropolyether group-containing polymers having a hydrolyzable silyl group or a hydroxysilyl group that are represented by formula (1) include those illustrated below: 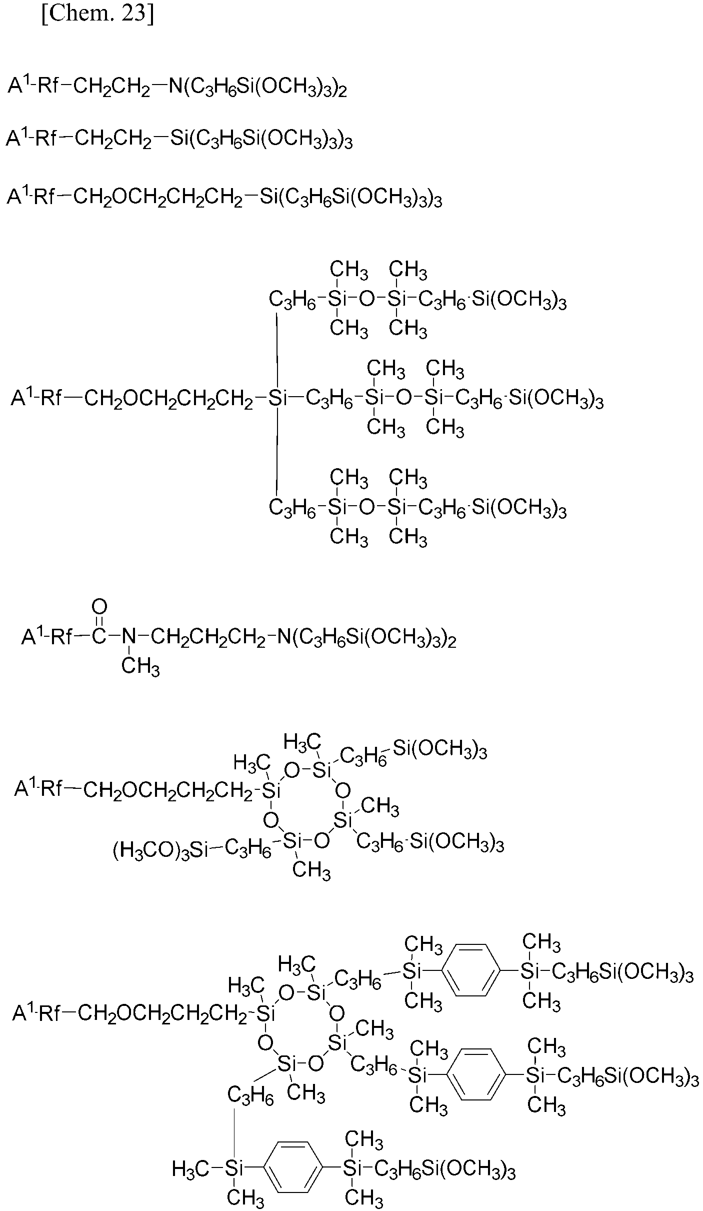 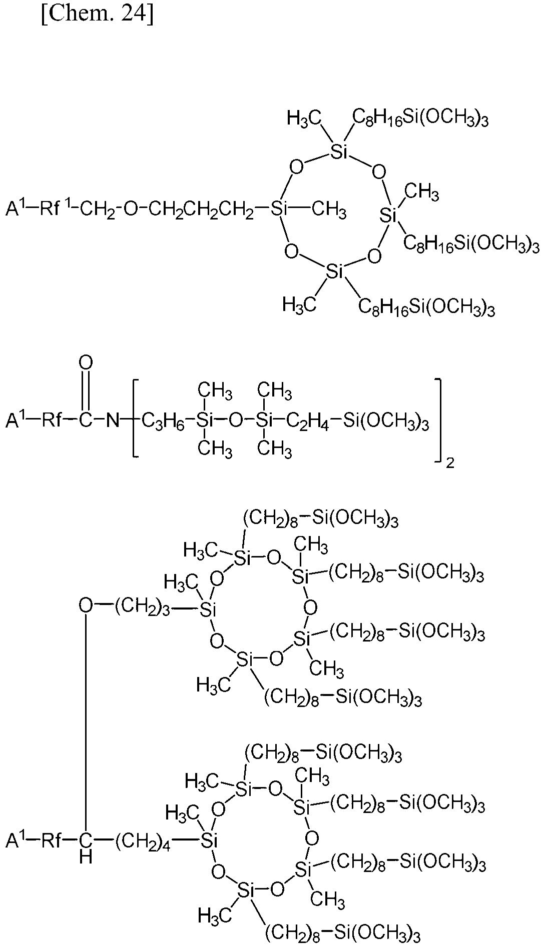 (wherein A¹ and Rf are the same as defined hereinabove).

In the fluoropolyether group-containing polymer of formula (1) having a hydrolyzable silyl group or a hydroxysilyl group, the molar weight of the fluoropolyether group (Rf) is 2,500 Da or more, and preferably 3,000 Da or more (that is, the number average molecular weight of the fluoropolyether group (Rf) is 2,500 or more, and preferably 3,000 or more). If the molar weight of the fluoropolyether group (Rf) is less than 2,500 Da (the number average molecular weight is less than 2,500), the coating agent fails to give a cured film having excellent antifouling properties and abrasion resistance. The upper limit of the molar weight (the number average molecular weight) of the fluoropolyether group (Rf) may be usually about 10,000 Da, preferably about 6,000 Da (that is, the upper limit of the number average molecular weight of the fluoropolyether group (Rf) may be about 10,000, preferably about 6,000).

In the fluoropolyether group-containing polymer of formula (1) having a hydrolyzable silyl group or a hydroxysilyl group, the fluorine content (excluding trifluoromethyl groups atoms present in branched chains of the fluoropolyether group) is 50 wt% or less, and preferably 45 wt% or less. If the fluorine content (excluding trifluoromethyl groups present in branched chains of the fluoropolyether group) is more than 50 wt%, the polymer cannot be dissolved uniformly into an organic solvent having no fluorine atoms in the molecule (a fluorine-free organic solvent) and thus cannot form a uniform cured film. The lower limit of the fluorine content (excluding trifluoromethyl groups present in branched chains of the fluoropolyether group) may be usually about 35 wt%, preferably about 38 wt%.

In the present invention, the "fluorine content (excluding trifluoromethyl groups present in branched chains of the fluoropolyether group)" means the content (wt%) of fluorine atoms in the entire molecular formula of the fluoropolyether group-containing polymer having a hydrolyzable silyl group or a hydroxysilyl group that is represented by formula (1). In the case where the repeating units (the fluorooxyalkylene units) constituting the fluoropolyether group Rf in formula (1) contain branched chains, any trifluoromethyl groups (CF₃) contained in the branched chains are excluded (removed) from the entire molecule and the resultant molecular formula is used for the calculation of the content (wt%) of fluorine atoms. For example, the fluorine content may be determined as follows. The fluoropolyether group-containing polymer of formula (1) having a hydrolyzable silyl group or a hydroxysilyl group is analyzed by ¹H-NMR and ¹⁹F-NMR to obtain the characteristic peak intensity ratio of the main chain structure to the terminal structures, and the number of repetitions of the repeating units (the fluorooxyalkylene units) constituting the fluoropolyether group Rf in the fluoropolyether group-containing polymer is calculated. The molecular formula thus obtained is subjected to elemental analysis to calculate the (theoretical) F atom content. When the repeating units (the fluorooxyalkylene units) contain branched chains, any trifluoromethyl groups (CF₃) contained in the branched chains are assumed to be absent in the formula (are removed from the molecular formula), and the resultant molecular formula excluding the contribution of trifluoromethyl groups (CF₃) is subjected to elemental analysis to calculate the (theoretical) F atom content.

The fluoropolyether group-containing polymer of formula (1) having a hydrolyzable silyl group or a hydroxyl-containing silyl group may be prepared by, for example, methods disclosed in JP-A 2022-19577 (Patent Document 10), JP-A 2014-214194 (Patent Document 11), and WO 2021/065537 (Patent Document 12).

The fluorine-containing coating agent of the present invention comprises a composition in which the above-described fluoropolyether group-containing polymer having a hydrolyzable silyl group or a hydroxysilyl group and/or the partial (hydrolyzed) condensate thereof is uniformly dissolved in an organic solvent having no fluorine atoms in the molecule. The fluorine-containing coating agent preferably consists of such a composition.

For example, the organic solvent having no fluorine atoms in the molecule may be one, or two or more organic solvents selected from isopropyl alcohol (also known as isopropanol), methyl isobutyl ketone, methyl ethyl ketone, hexane, n-heptane, ethyl acetate, isopropyl acetate, butyl acetate, tetrahydrofuran, isononane, isooctane, cyclopentanone, propylene glycol monomethyl ether, and propylene glycol monomethyl ether acetate. Two or more of the above organic solvents may be mixed. The organic solvent is preferably capable of dissolving uniformly the fluoropolyether group-containing polymer and/or the partial (hydrolyzed) condensate thereof.

The phrase "dissolved uniformly" means that mixing of the fluoropolyether group-containing polymer and/or the partial (hydrolyzed) condensate thereof with the organic solvent having no fluorine atoms in the molecule results in a transparent liquid mixture that is free from white turbidity or precipitates according to visual observation.

In the fluorine-containing coating agent of the present invention, the optimal concentration of the fluoropolyether group-containing polymer having a hydrolyzable silyl group or a hydroxysilyl group and/or the partial (hydrolyzed) condensate thereof that is dissolved in the organic solvent varies depending on the processing method and may be any amount that is easy to weigh. When the coating agent will be directly applied, the concentration is preferably 0.01 to 10 parts by weight, particularly preferably 0.05 to 5 parts by weight, per 100 parts by weight of the total of the organic solvent and the fluoropolyether group-containing polymer having a hydrolyzable silyl group or a hydroxysilyl group and/or the partial (hydrolyzed) condensate thereof. When the coating agent will be applied by evaporation, the concentration is preferably 1 to 80 parts by weight, particularly preferably 3 to 30 parts by weight, per 100 parts by weight of the total of the organic solvent and the fluoropolyether group-containing polymer having a hydrolyzable silyl group or a hydroxysilyl group and/or the partial (hydrolyzed) condensate thereof.

The fluorine-containing coating agent of the present invention is a uniform solution of the fluoropolyether group-containing polymer and/or the partial (hydrolyzed) condensate thereof in the organic solvent having no fluorine atoms in the molecule. Where necessary, the coating agent may optionally further contain an organic solvent having a fluorine atom in the molecule (a fluorine-containing organic solvent) without impairing the advantageous effects of the present invention. Examples of the organic solvents having a fluorine atom (the fluorine-containing organic solvents) include fluorine-modified aliphatic hydrocarbon solvents (such as perfluoroheptane and perfluorooctane), fluorine-modified aromatic hydrocarbon solvents (such as 1,3-bis(trifluoromethyl)benzene), fluorine-modified ether solvents (such as methyl perfluorobutyl ether, ethyl perfluorobutyl ether, and perfluoro(2-butyltetrahydrofuran)), and fluorine-modified alkylamine solvents (such as perfluorotributylamine and perfluorotripentylamine).

When the organic solvent having no fluorine atoms in the molecule and the organic solvent having a fluorine atom are used in combination, it is preferable that the proportion of the organic solvent having no fluorine atoms in the molecule relative to the whole of the organic solvents in the fluorine-containing coating agent be 40 wt% or more and less than 100 wt%, and particularly preferably 60 to 99 wt%.

Where necessary, the fluorine-containing coating agent of the present invention may include a hydrolysis condensation catalyst, for example, an organotin compound (such as dibutyltin dimethoxide or dibutyltin dilaurate), an organotitanium compound (such as tetra-n-butyl titanate), an organic acid (such as acetic acid, methanesulfonic acid, or fluorine-modified carboxylic acid), or an inorganic acid (such as hydrochloric acid or sulfuric acid). Among those described above, for example, acetic acid, tetra-n-butyl titanate, dibutyltin dilaurate, and fluorine-modified carboxylic acid are particularly desirable.

The amount in which the hydrolysis condensation catalyst is added is a catalytic amount and is usually 0.01 to 5 parts by weight, in particular, 0.1 to 1 part by weight per 100 parts by weight of the fluoropolyether group-containing polymer having a hydrolyzable silyl group or a hydroxysilyl group and/or the partial (hydrolyzed) condensate thereof.

Any additives may be added to the fluorine-containing coating agent of the present invention without impairing the advantageous effects of the present invention. Specific examples include rust inhibitors, surfactants, antioxidants, antistatic agents, antibacterial agents, silane coupling agents, and primer components. Many of these additives can be uniformly dissolved into organic solvents having no fluorine atoms in the molecule.

### [Articles]

An article of the present invention is an article for water-exposed application that has a layer comprising a cured product (the layer will be also written as the cured layer or the cured coating layer) of the fluoropolyether group-containing polymer having a hydrolyzable silyl group or a hydroxyl-containing silyl group and/or the partial (hydrolyzed) condensate thereof that is contained in the fluorine-containing coating agent described hereinabove. Specifically, the article is preferably an article for water-exposed application that has a substrate and a cured layer (a cured coating layer) of the fluoropolyether group-containing polymer having a hydrolyzable silyl group or a hydroxyl-containing silyl group and/or the partial (hydrolyzed) condensate thereof that is disposed on a surface of the substrate.

The surface of the article of the present invention preferably has the following initial contact angle with water, antifouling properties, and abrasion resistance.

In the article of the present invention, the initial (immediately after the formation of the cured film) contact angle with water (the initial contact angle) on the surface of the article is preferably 105° or more, and more preferably 110° or more. By having a contact angle with water at or above the lower limit, the article can reliably exhibit sufficient initial antifouling properties. The contact angle with water on the surface of the article is measured by a method in accordance with JIS R3257.

In the article having a layer comprising a cured product of the fluorine-containing coating agent of the present invention, the surface of the article preferably has a "Good" or higher antifouling rating when tested under conditions described below. The rating is more preferably "Superior". If the test result is "Fail", the cured film is insufficient in antifouling properties and does not allow for easy removal of water scale accumulated on the surface of the article.

### [Antifouling test conditions]

### - Removability of tap water scale from the surface of the cured layer disposed on a SUS304 (preferably SUS304 BA finished) substrate

0.2 mL of tap water is dropped onto the surface of the cured layer and is dried for 24 hours under an environment at 25°C and 50% RH to form a tap water scale on the surface of the cured layer. The scale is removed by rubbing with pure water-moistened BEMCOT (M-3II, manufactured by OZU CORPORATION) at a pressure of 200 g/cm². The surface is visually inspected to determine the number of rubbing applications required for descaling. The rating is "Superior" when the number of rubbing applications is 3 or less, "Good" when the number of rubbing applications is 5 or less, "Acceptable" when the number of rubbing applications is 20 or less, and "Fail" when the number of rubbing applications is more than 20.

Furthermore, in the article of the present invention, the surface of the article preferably resists 10,000 or more, more preferably 15,000 or more, and still more preferably 20,000 or more abrasion resistance cycles (friction resistance cycles) under test conditions described below. If the abrasion resistance cycles (the friction resistance cycles) is less than 10,000, the cured film is easily degraded by cleaning or the like and does not maintain water/oil repellency or antifouling properties for a long time.

### [Abrasion resistance test conditions]

### - Evaluation of the resistance of the surface on a SUS304 substrate to wet fabric abrasion using a reciprocating abrasion tester

| | |
|---|---|
| Material of substrate of article: | SUS304 (preferably SUS304 BA finished) |
| Abrasive material: | pure water-moistened BEMCOT (M-3II, manufactured by OZU CORPORATION) |
| Load: | 1 kgf |
| Reciprocating distance: | 40 mm |
| Reciprocating speed: | 60 reciprocations per minute |
| Test environment conditions: | 25°C, 50% RH |

The contact angle with water of a friction-abraded portion is measured every 2,500 reciprocating friction cycles, and the number of reciprocating abrasion cycles up to which the contact angle with water is 100° or more is taken as the number of abrasion resistance cycles.

In the present invention, the surface of the article can attain Good or higher antifouling rating and the above abrasion resistance (can resist 10,000 or more friction resistance cycles) by virtue of the fluorine-containing coating agent being such that the fluoropolyether group (Rf) in the fluoropolyether group-containing polymer having a hydrolyzable silyl group or a hydroxyl-containing silyl group has a molar weight of 2,500 Da or more (a number average molecular weight of 2,500 or more) and the fluorine content of the polymer (excluding trifluoromethyl groups present in branched chains of the fluoropolyether group) is 50 wt% or less.

### [Methods for modifying the surface of an article/methods for manufacturing an article]

A method for modifying the surface of an article of the present invention (or a method for manufacturing an article of the present invention) comprises a step of applying the fluorine-containing coating agent of the present invention described hereinabove to the whole or part of the surface of an article by a dry or wet process, and curing the fluorine-containing coating agent to form a layer comprising a cured product (the layer will be also written as the cured layer or the cured coating layer) of the fluoropolyether group-containing polymer having a hydrolyzable silyl group or a hydroxyl-containing silyl group and/or the partial (hydrolyzed) condensate thereof that is contained in the fluorine-containing coating agent.

The fluorine-containing coating agent of the present invention for use on articles for water-exposed applications may be applied to a substrate (may form a film on a substrate) by a known technique, such as brush coating, dipping, spraying, or evaporation. In the case of evaporation, the heating mode is not particularly limited and may be either resistance heating or EB heating. The curing temperature varies depending on how the coating agent is cured. In the case of, for example, direct application (such as brush coating, dipping, or spraying), preferred conditions are such that the temperature is 25 to 200°C, in particular 25 to 80°C, and the time is 30 minutes to 36 hours, in particular 1 to 24 hours. When the coating agent is applied by evaporation, conditions are desirably such that the temperature is in the range of 20 to 200°C, in particular 25 to 80°C, and the time is 30 minutes to 36 hours, in particular 30 minutes to 24 hours. The coating agent may be cured under humidified conditions. In the case of, for example, spray coating, the coating agent may be diluted beforehand with a fluorinated solvent containing an amount of water and may be thereby hydrolyzed, that is, Si-OH may be formed. The coating that is sprayed in this manner cures rapidly after the application.

The thickness of the cured film is chosen appropriately in accordance with the type of substrate but is usually 0.1 to 100 nm, in particular 1 to 20 nm. For example, the film thickness may be measured by such a technique as spectroscopic reflectance measurement, X-ray reflectance measurement, spectroscopic ellipsometry measurement, or fluorescent X-ray measurement.

The substrate of the article that is to be treated with the fluorine-containing coating agent of the present invention for use on articles for water-exposed applications is not particularly limited and may be any of various materials, such as paper, fabrics, metals and oxides thereof, glass, plastics, ceramics, and quartz. The fluorine-containing coating agent of the present invention can impart water/oil repellency, antifouling properties, and abrasion resistance (resistance to moistened fabric abrasion) to the substrate. In particular, a substrate that has been treated with SiO₂ as a primer for the coating may be suitably used.

According to the present invention, the surface of an article for water-exposed application may be modified in terms of water/oil repellency, antifouling properties, and abrasion resistance (resistance to moistened fabric abrasion) by the application of the fluorine-containing coating agent of the present invention to the whole or part of the surface of the article by a dry process (evaporation) or a wet process (such as brushing, dipping, or spraying), followed by curing to form a layer.

Thus, the method for modifying the surface of an article (or the method for manufacturing an article) of the present invention is useful for surface modification of articles that are intermittently brought into contact with tap water or rainwater, in particular, is useful to form, for example, antifouling coatings on sanitary products, such as bathtubs, sinks, and toilets; antifouling coatings on window glass or tempered glass and headlamp covers in automobiles, trains, aircraft, and the like; antifouling coatings on exterior wall building materials; and antifouling coatings on kitchen building materials.

### EXAMPLES

Hereinbelow, the present invention will be described in greater detail by presenting Examples and Comparative Examples. However, the present invention is not limited to the following Examples. The number average molecular weight of the fluoropolyether group in the fluoropolyether group-containing polymer is a value calculated from the characteristic peak intensity ratio of the main chain structure to the terminal structures of the fluoropolyether group-containing polymer based on ¹H-NMR analysis and ¹⁹F-NMR analysis. The fluorine content is the (theoretical) content (wt%) of fluorine atoms determined by elemental analysis of the molecular formula established by calculating the number of repetition of the repeating units (the fluorooxyalkylene groups) constituting the fluoropolyether group based on ¹H-NMR analysis and ¹⁹F-NMR analysis. When the repeating units (the fluorooxyalkylene groups) contain branched chains, the fluorine content is the (theoretical) content (wt%) of fluorine atoms determined by elemental analysis of a molecular formula excluding the contribution of trifluoromethyl groups (CF₃) from the repeating units (the fluorooxyalkylene units) containing the branched chains. Furthermore, the film thickness is a value measured by spectroscopic ellipsometry measurement using a spectroscopic ellipsometer.

### [Example 1]

A coating agent was prepared by dissolving compound (A) illustrated in the formula below into hexane so that the concentration would be 0.1 wt%. Visual observation showed that compound (A) was transparently and uniformly dissolved in hexane. A stainless steel plate with BA (bright annealing) surface finish (SUS304 BA) was spray coated with the coating agent and the coating was allowed to stand in an atmosphere at 80°C and 80% RH for 30 minutes and was then held in an atmosphere at 25°C and 50% RH for at least 12 hours. The coating was thereby cured to form a cured coating layer (film thickness: 15 nm) of the fluoropolyether group-containing polymer.

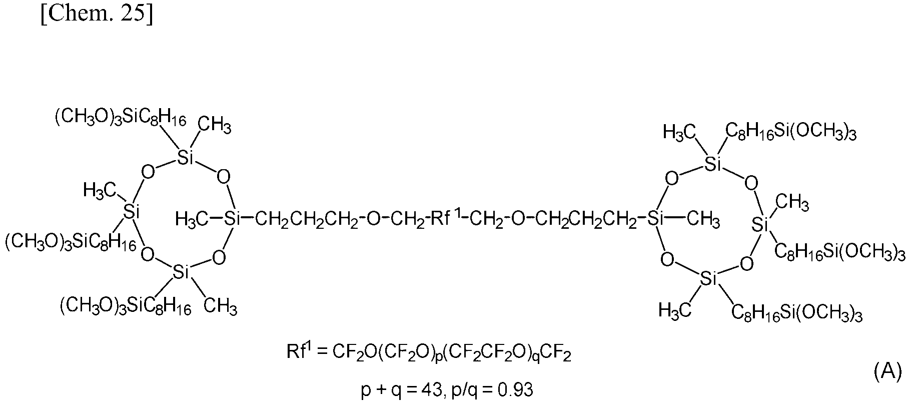

### [Evaluation of initial contact angle]

The contact angle with water on the surface of the cured coating layer was measured under the following conditions in accordance with JIS R3257. The results are described in Table 1.

| | |
|---|---|
| Measurement device: | DM-701 (manufactured by Kyowa Interface Science Co., Ltd.) |
| Measurement method: | Droplet method |
| Water drop volume: | 2 µL |
| Contact angle analysis method: | 0/2 method |
| Temperature: | 25°C |
| Humidity: | 50% RH |

### [Evaluation of antifouling properties]

### - Removability of tap water scale from the surface of the cured coating layer

0.2 mL of tap water was dropped onto the surface of the SUS304 (BA finished) substrate coated with the cured film (namely, the surface of the cured coating layer) and was dried for 24 hours under an environment at 25°C and 50% RH to form a tap water scale on the surface of the cured coating layer. The scale was removed by rubbing with pure water-moistened BEMCOT (M-3II, manufactured by OZU CORPORATION) at a pressure of 200 g/cm². The surface was visually inspected to determine the number of rubbing applications required for descaling. The rating was "Superior (⊚)" when the number of rubbing applications was 3 or less, "Good (O)" when the number of rubbing applications was 5 or less, "Acceptable (△)" when the number of rubbing applications was 20 or less, and "Fail (×)" when the number of rubbing applications was more than 20. The results are described in Table 1.

### [Evaluation of abrasion resistance]

### - Evaluation of the resistance of the surface of the cured coating layer to wet fabric abrasion using a reciprocating abrasion tester

| | |
|---|---|
| Material of substrate of article: | SUS304 (BA finished) |
| Abrasive material: | pure water-moistened BEMCOT (M-3II, manufactured by OZU CORPORATION) |
| Load: | 1 kgf |
| Reciprocating distance: | 40 mm |
| Reciprocating speed: | 60 reciprocations per minute |
| Test environment conditions: | 25°C, 50% RH |

The contact angle with water of a friction-abraded portion was measured every 2,500 reciprocating friction cycles, and the number of reciprocating abrasion cycles up to which the contact angle with water was 100° or more was taken as the number of abrasion resistance cycles. The results are described in Table 1.

### [Example 2]

A cured coating layer (film thickness: 15 nm) was formed and evaluated in the same manner as in Example 1, except that the coating agent was prepared by dissolving compound (B) illustrated in the formula below into isopropyl acetate so that the concentration would be 0.1 wt%. Visual observation showed that compound (B) was transparently and uniformly dissolved in isopropyl acetate. The evaluation results of initial contact angle, antifouling properties, and abrasion resistance are described in Table 1.

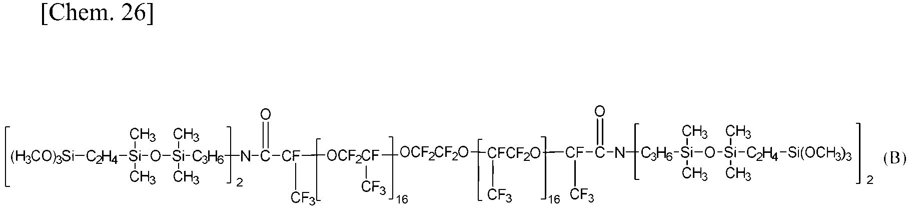

### [Example 3]

A cured coating layer (film thickness: 15 nm) was formed and evaluated in the same manner as in Example 1, except that the coating agent was prepared by dissolving compound (C) illustrated in the formula below into isopropyl alcohol so that the concentration would be 0.1 wt%. Visual observation showed that compound (C) was transparently and uniformly dissolved in isopropyl alcohol. The evaluation results of initial contact angle, antifouling properties, and abrasion resistance are described in Table 1.

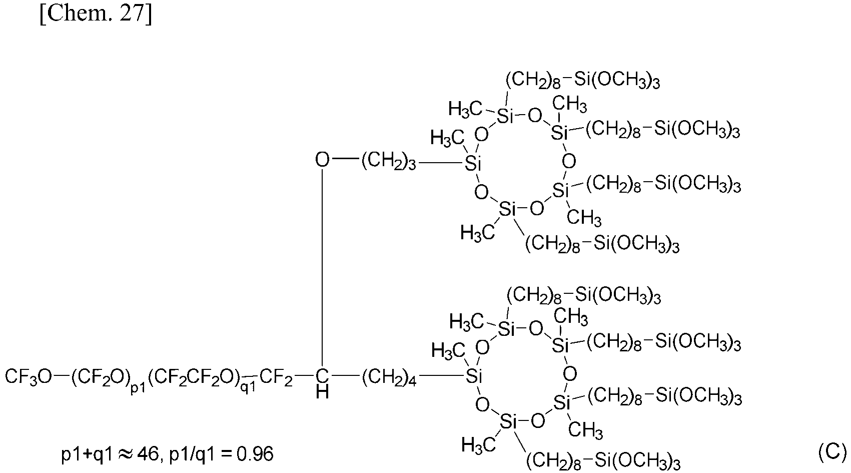

### [Comparative Example 1]

A cured coating layer (film thickness: 15 nm) was formed and evaluated in the same manner as in Example 1, except that the coating agent was prepared by dissolving compound (D) illustrated in the formula below into isopropyl alcohol so that the concentration would be 0.1 wt%. Visual observation showed that compound (D) was transparently and uniformly dissolved in isopropyl alcohol. The evaluation results of initial contact angle, antifouling properties, and abrasion resistance are described in Table 1.

[Chem. 28] (H₃CO)₃Si-CH₂-CH₂-CH₂-O-CH₂-CF₂O(CF₂O)ₚ₂(CF₂CF₂O)_{q2}CF₂-CH₂-O-CH₂-CH₂-CH₂-Si(OCH₃)₃ (D) p2+q2 = 13, q2 / p2 = 1.33

### [Comparative Example 2]

A coating agent was prepared by mixing compound (E) illustrated in the formula below with methyl ethyl ketone so that the concentration would be 0.1 wt%. However, the liquid mixture of compound (E) with methyl ethyl ketone was white turbid. The formation of a cured film by spray coating failed and the evaluations were infeasible.

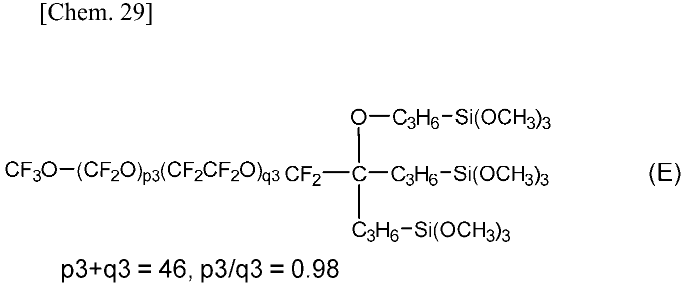

### [Comparative Example 3]

A coating agent was prepared by mixing compound (F) illustrated in the formula below with methyl ethyl ketone so that the concentration would be 0.1 wt%. However, the liquid mixture of compound (F) with methyl ethyl ketone was white turbid. The formation of a cured film by spray coating failed and the evaluations were infeasible.

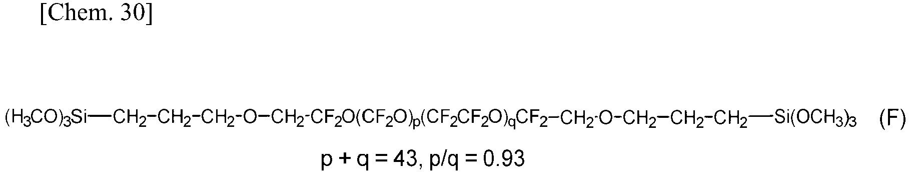

### [Comparative Example 4]

A cured coating layer (film thickness: 15 nm) was formed and evaluated in the same manner as in Example 1, except that the coating agent was prepared by dissolving compound (G) illustrated in the formula below into methyl ethyl ketone so that the concentration would be 0.1 wt%. Visual observation showed that compound (G) was transparently and uniformly dissolved in methyl ethyl ketone. The evaluation results of initial contact angle, antifouling properties, and abrasion resistance are described in Table 1.

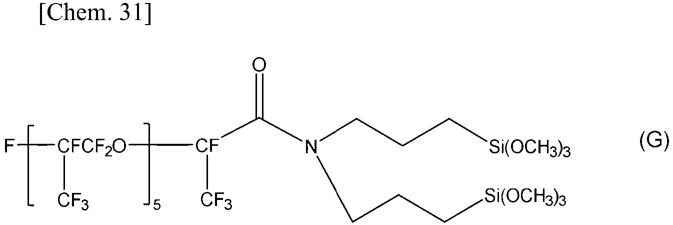

**[Table 1]**

| | Compound | Number average molecular weight of Rf | Fluorine content * (wt%) | Diluent solvent | Compound concentration (wt%) | Solubility | Initial contact angle (°) | Antifouling rating | Abrasion resistance (cycles) |
|---|---|---|---|---|---|---|---|---|---|
| Example 1 | (A) | 4,070 | 42 | Hexane | 0.1 | Transparent and uniform | 113 | ○ | 15,000 |
| Example 2 | (B) | 5,600 | 41 | Isopropyl acetate | 0.1 | Transparent and uniform | 113 | ○ | 10,000 |
| Example 3 | (C) | 4,270 | 39 | Isopropyl alcohol | 0.1 | Transparent and uniform | 114 | ⊚ | 20,000 |
| Comparative Example 1 | (D) | 1,350 | 48 | Isopropyl alcohol | 0.1 | Transparent and uniform | 109 | Δ | 5,000 |
| Comparative Example 2 | (E) | 4,300 | 56 | Methyl ethyl ketone | 0.1 | White turbid | - | - | - |
| Comparative Example 3 | (F) | 4,070 | 58 | Methyl ethyl ketone | 0.1 | White turbid | - | - | - |
| Comparative Example 4 | (G) | 950 | 36 | Methyl ethyl ketone | 0.1 | Transparent and uniform | 114 | × | 2,500 |

| | | | | | | | | | |
|---|---|---|---|---|---|---|---|---|---|
| *: Fluorine content in the compound (the polymer) (excluding trifluoromethyl groups in branched chains) | | | | | | | | | |

The above results have shown that cured films with excellent antifouling properties and abrasion resistance are obtained when the fluorine-containing coating agent that is used is such that the coating agent is a uniform solution of a fluoropolyether group-containing polymer having a hydrolyzable silyl group or a hydroxysilyl group and/or a partial (hydrolyzed) condensate thereof in an organic solvent having no fluorine atoms in the molecule and is such that the molar weight of the fluoropolyether group is 2,500 Da or more and the fluorine content in the polymer (excluding trifluoromethyl groups present in branched chains of the fluoropolyether group) is 50 wt% or less.

## Claims

1. A fluorine-containing coating agent for use on article for water-exposed application, comprising a composition in which a fluoropolyether group-containing polymer having a hydrolyzable silyl group or a hydroxysilyl group and/or a partial (hydrolyzed) condensate thereof is uniformly dissolved in an organic solvent having no fluorine atoms in the molecule, the molar weight of the fluoropolyether group in the polymer being 2,500 Da or more, and the fluorine content in the polymer (excluding a trifluoromethyl group present in a branched chain of the fluoropolyether group) being 50 wt% or less.

2. The fluorine-containing coating agent according to claim 1, wherein the fluoropolyether group-containing polymer having a hydrolyzable silyl group or a hydroxysilyl group is represented by formula (1) below:
[Chem. 1] A¹-Rf-D (1)
wherein Rf is a divalent fluoropolyether group having a molar weight of 2,500 Da or more; A¹ is a fluorine atom, a monovalent fluorine-containing hydrocarbon group terminated with CF₃- or CF₂H- and optionally containing an oxygen atom, or D; and D independently at each occurrence is a monovalent group represented by formula (2) below: 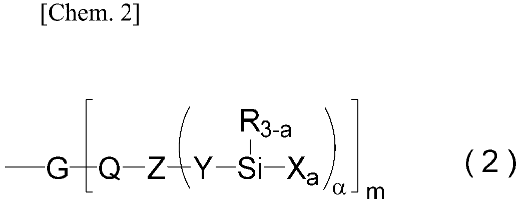
wherein m is 1 or 2; G is a single bond or a trivalent organic group; Q independently at each occurrence is a single bond, an oxygen atom, or a divalent organic group; Z independently at each occurrence is a single bond or a trivalent to octavalent group; α independently at each occurrence is an integer of 1 to 7; Y independently at each occurrence is a single bond or a divalent hydrocarbon group optionally having one, or two or more selected from fluorine atoms, silicon atoms, and siloxane bonds; R independently at each occurrence is a C1-C4 alkyl group or a phenyl group; X independently at each occurrence is a hydroxyl group or a hydrolyzable group; and a is 2 or 3 independently with respect to each silicon atom to which X is bonded, with a proviso that at least one of G, Q, Z, and Y is not a single bond.

3. The fluorine-containing coating agent according to claim 2, wherein Rf in formula (1) is a divalent polyfluorooxyalkylene structure-containing group represented by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ(WO)ᵥ-C_{d}F_{2d}- wherein W is a C1-C6 fluoroalkylene group containing one or more hydrogen atoms; d independently with respect to each unit is an integer of 0 to 5; p, q, r, s, t, u, and v are each independently an integer of 0 to 150; the sum of p, q, r, s, t, u, and v is an integer of 8 to 250 and is such an integer that the molar weight of Rf is 2,500 Da or more; the units indicated with these subscripts are each linear or branched; and the repeating units in the parentheses followed by p, q, r, s, t, u, and v are each optionally bonded randomly.

4. The fluorine-containing coating agent according to claim 2, wherein in formula (2), G is a single bond or a trivalent group represented by any of the following formulas: 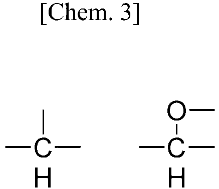
wherein the left valence bond is bonded to Rf, and the other valence bonds are bonded to Q; Q is a single bond, an oxygen atom, an amide bond, an ether bond, a carbonyl bond, an ester bond, or a divalent group comprising a C1-C15 unsubstituted or substituted, divalent hydrocarbon group optionally containing one or more bonds selected from the group consisting of amide bonds, ether bonds, carbonyl bonds, ester bonds, sulfide bonds, urethane bonds, siloxane bonds, triazine bonds, diorganosilylene bonds, silphenylene bonds, and silalkylene bonds; and
Z is a single bond or a trivalent to octavalent group selected from a silicon atom, a nitrogen atom, and a trivalent to octavalent organopolysiloxane residue having a siloxane bond.

5. The fluorine-containing coating agent according to claim 2, wherein X in formula (2) independently at each occurrence is a group selected from the groups consisting of hydroxyl groups, C1-C10 alkoxy groups, C2-C10 alkoxy-substituted alkoxy groups, C2-C10 acyloxy groups, C2-C10 alkenyloxy groups, and halogen groups.

6. The fluorine-containing coating agent according to claim 1, wherein the organic solvent having no fluorine atoms in the molecule is one, or two or more organic solvents selected from isopropyl alcohol, methyl isobutyl ketone, methyl ethyl ketone, hexane, n-heptane, ethyl acetate, isopropyl acetate, butyl acetate, tetrahydrofuran, isononane, isooctane, cyclopentanone, propylene glycol monomethyl ether, and propylene glycol monomethyl ether acetate.

7. An article for water-exposed application having a layer comprising a cured product of the fluoropolyether group-containing polymer having a hydrolyzable silyl group or a hydroxysilyl group and/or the partial (hydrolyzed) condensate thereof that is contained in the fluorine-containing coating agent according to any one of claims 1 to 6.

8. The article for water-exposed application according to claim 7, wherein the surface of the cured layer has a Good or higher antifouling rating when tested under conditions described below:
[Antifouling test conditions]
- Removability of tap water scale from the surface of the cured layer disposed on a SUS304 substrate
0.2 mL of tap water is dropped onto the surface of the cured layer and is dried for 24 hours under an environment at 25°C and 50% RH to form a tap water scale on the surface of the cured layer; the scale is removed by rubbing with pure water-moistened BEMCOT (M-3II, manufactured by OZU CORPORATION) at a pressure of 200 g/cm²; the surface is visually inspected to determine the number of rubbing applications required for descaling; the rating is "Superior" when the number of rubbing applications is 3 or less, "Good" when the number of rubbing applications is 5 or less, "Acceptable" when the number of rubbing applications is 20 or less, and "Fail" when the number of rubbing applications is more than 20.

9. The article for water-exposed application according to claim 7, wherein the surface of the cured layer resists 10,000 or more abrasion resistance cycles under test conditions described below:
[Abrasion resistance test conditions]
- Evaluation of the resistance of the surface of the cured layer disposed on a SUS304 substrate to wet fabric abrasion using a reciprocating abrasion tester
Material of substrate of article: SUS304
| | |
|---|---|
| Abrasive material: | pure water-moistened BEMCOT (M-3II, manufactured by OZU CORPORATION) |
| Load: | 1 kgf |
| Reciprocating distance: | 40 mm |
| Reciprocating speed: | 60 reciprocations per minute |
| Test environment conditions: | 25°C, 50% RH |
The contact angle with water of a friction-abraded portion is measured every 2,500 reciprocating friction cycles, and the number of reciprocating abrasion cycles up to which the contact angle with water is 100° or more is taken as the number of abrasion resistance cycles.

10. A method for modifying a surface of an article for water-exposed application, comprising a step of applying the fluorine-containing coating agent according to any one of claims 1 to 6 to the whole or part of the surface of the article by a dry or wet process, and curing the fluorine-containing coating agent to form a layer comprising a cured product of the fluoropolyether group-containing polymer having a hydrolyzable silyl group or a hydroxysilyl group and/or the partial (hydrolyzed) condensate thereof that is contained in the fluorine-containing coating agent.
